# FASCICULE DE BREVET EUROPEEN

(11) **EP 2 364 077 B1**
(45) Date de publication et mention de la délivrance du brevet: **11.05.2016**
(21) Numéro de dépôt: 09756835.6
(22) Date de dépôt: 28.10.2009
(51) Int. Cl.: A01B 63/10

(54) **DISPOSITIF DE RELEVAGE AVANT POUR TRACTEUR**
FRONTHUBVORRICHTUNG FÜR EINEN TRAKTOR
FRONT LIFTING DEVICE FOR A TRACTOR

(30) Priorité: 30.10.2008 FR 0806039
(43) Date de publication de la demande: 14.09.2011
(73) Titulaire: Defrancq, Hubert, 02190 Guignicourt (FR)
(72) Inventeur: Defrancq, Hubert, 02190 Guignicourt (FR)
(74) Mandataire: Cabinet Armengaud Aîné
(86) Numéro de dépôt international: PCT/IB2009/054770
(87) Numéro de publication internationale: WO 2010/049896

(56) Documents cités:
- EP-A- 0 182 091
- EP-A- 1 018 292
- DE-U1- 29 901 460
- FR-A- 2 408 989
- FR-A- 2 443 791

## Description

L'invention est relative à un dispositif de relevage avant pour tracteur, en particulier agricole, permettant d'atteler et de manoeuvrer un outil.

Les relevages avant sont conçus avec une course de relevage conforme aux définitions des standards internationaux pour assurer un fonctionnement sûr et une compatibilité avec les différents outils associés, y compris ceux entraînés par prise de force.

Cependant lorsque ces outils ne sont pas utilisés il est souvent souhaité de pouvoir escamoter les bras qui s'étendent vers l'avant afin de réduire leur déport longitudinal et d'éviter d'exposer des parties saillantes pour réduire le risque en cas de choc frontal.

Une solution communément utilisée consiste à équiper le relevage de bras repliables, selon le brevet FR 2688378 au nom du même déposant. Cependant cette solution complique la structure. De plus elle n'autorise pas une possibilité d'oscillation assurant le suivi de relief transversal tout en portant l'outil.

Une autre solution a été proposée pour permettre à un relevage avant, équipé d'une structure de brancard inférieur avec liaison rigide entre les deux côtés, d'être replié. Cette solution consiste à déplacer le point d'ancrage inférieur des vérins de sorte que la course de levage s'en trouve accrue. Cette solution présente trois inconvénients majeurs :
- en mode grande course la capacité de levage est limitée ;
- il faut manuellement déconnecter le brancard pour passer d'un mode puissance à un mode course, ce qui est pénible et fastidieux ;
- en mode course, il y a un risque d'utilisation erronée du relevage qui nécessite une mesure de l'angle du troisième point comme moyen de bloquer la course vers le haut ; selon la façon dont le troisième point est raccordé à l'outil, la course de levage est variable , donc non prévisible

Une version plus élaborée de cette solution est proposée dans le brevet GB2439709 qui décrit un brancard inférieur muni d'éléments de liaison pouvant être verrouillés dans deux positions : course haute autorisant le repliement et course basse correspondant au mode d'utilisation du relevage avec des outils. De plus un vérin d'assistance permet le mouvement, sans effort physique, du brancard inférieur lors du passage du mode course basse au mode course haute. Cependant cette solution présente deux limites importantes :
- il faut manuellement déverrouiller des axes pour passer d'une positon à l'autre : outre la contrainte normale cette opération peut être rendue délicate en raison des jeux d'alignements ou des grippages d'axes dans leur support ;
- cette solution ne règle pas le problème du fonctionnement des relevages à bras autorisant un mouvement d'oscillation transversale tout en portant l'outil.

EP 0182091 montre un relevage avant pour tracteur dans lequel, en position de travail, chaque bras est relié à un levier, commandé par un vérin, à l'aide d'une biellette, sensiblement verticale, dont la longueur peut être ajustée manuellement. Lorsqu'aucun outil n'est porté par le relevage, il est possible de libérer la biellette du levier et de relever le bras en position effacée sensiblement verticale. Toutes ces opérations doivent être effectuées manuellement et prennent du temps.

L'invention a pour but, surtout, de fournir un dispositif de relevage qui permet d'éliminer les problèmes cités plus haut et apporte des avantages complémentaires qui élargissent le champ d'application dudit relevage avant. Il est souhaitable de plus que ce dispositif soit d'une réalisation robuste et économique.

Selon l'invention, un dispositif de relevage avant d'un tracteur, en particulier agricole, permettant d'atteler et de manoeuvrer un outil, comprenant :
- un châssis à fixer sur l'ossature du tracteur ;
- deux bras inférieurs articulés sur le châssis et comportant, à leur extrémité éloignée du châssis, un moyen d'attelage de l'outil ;
- au moins un vérin de travail dont l'un des éléments, cylindre ou tige, est relié au châssis et dont l'autre élément, tige ou cylindre, est relié à l'un des bras, ce vérin de travail permettant d'assurer les mouvements du ou des bras selon une course de travail entre une position basse et une position relevée correspondant au mode de travail normal,
- un moyen de déplacement, pouvant être commandé à partir d'une commande, propre à faire passer le ou les bras dans une position escamotée, plus en retrait que la position de travail relevée, le moyen de déplacement comprenant un moyen de liaison de longueur réglable entre l'un des éléments, cylindre ou tige, du vérin de travail et l'une des pièces constituées par le châssis ou un bras,
caractérisé en ce que le moyen de liaison est constitué par un deuxième vérin maintenu en une première position, allongée ou rétractée, en mode de travail normal, et commandé en une deuxième position, rétractée ou allongée, pour le passage en position escamotée, le passage de la position travail à la position escamotée s'obtenant sans aucun effort manuel, et en ce que le deuxième vérin est coaxial au premier vérin.

Le passage de la position escamotée à la position travail s'obtient indifféremment à partir du poste de conduite ou à partir des commandes situées à proximité du relevage avant. Le fait de retourner en position travail interdit automatiquement le retour à la position escamotée sans action sur la commande extérieure dédiée au passage en mode escamoté.
L'invention permet de n'autoriser le passage du relevage dans la configuration position escamotée que lorsque l'opérateur est certain qu'aucun outil ne reste attaché au relevage. En effet, un outil resté attaché à l'avant peut ne pas être visible du poste de conduite ; si le relevage passe en position haute escamotée, alors qu'un outil est attaché à l'avant, un risque important de détérioration de matériel existe, en raison d'interférences possibles en position haute extrême escamotée. En prévoyant que la commande du passage en configuration position escamotée se trouve à l'extérieur du poste de conduite, au voisinage du relevage, on est ainsi quasiment certain que l'opérateur constatera l'absence ou non d'un outil accroché, avant de commander ou non la configuration position escamotée. Toutefois cette commande du passage en configuration position escamotée peut se trouver dans le poste de conduite, notamment si un moyen est prévu soit pour permettre à l'opérateur de voir à l'avant du tracteur si un outil est attaché ou non, soit pour fournir une indication sur la présence ou non d'un tel outil.
Le retour de la configuration position escamotée à configuration de travail normale ne crée pas de difficultés et peut donc être commandé depuis le poste de conduite.

Le moyen de déplacement comprend un moyen de liaison de longueur réglable entre l'un des éléments, cylindre ou tige, du vérin de travail et l'une des pièces constituées par le châssis ou un bras, ce moyen de liaison étant maintenu pour le mode de travail normal dans un premier état, allongé ou rétracté selon la position du point d'attache du bras au vérin relativement à l'articulation du bras sur le châssis, et étant commandé dans un deuxième état, rétracté ou allongé, pour que le ou les bras passent à la position escamotée, plus en retrait que la position de travail relevée.

Le moyen de liaison de longueur réglable est constitué par un deuxième vérin maintenu en une première position, allongée ou rétractée, en mode de travail normal, et commandé en une deuxième position, rétractée ou allongée, pour le passage en position escamotée.

Le deuxième vérin est coaxial au premier vérin et son cylindre a même diamètre et prolonge celui du premier vérin, les cylindres étant solidaires.
De préférence, le cylindre du deuxième vérin et celui du premier cylindre sont formés par des portions d'un même cylindre et sont ouverts l'un vers l'autre, une bague de retenue étant ancrée dans la paroi interne du cylindre et marquant la séparation entre les deux portions, et le deuxième vérin comporte un piston flottant avec une tête et un prolongement de plus petit diamètre qui fait saillie dans le cylindre du premier vérin et constitue une butée pour l'ensemble piston-tige du premier vérin en position rentrée, la bague de retenue permettant d'arrêter le piston flottant, en position étendue maximum.
Le cylindre du deuxième vérin peut être articulé à son extrémité supérieure sur le châssis tandis que la tige du vérin de travail est articulée à son extrémité inférieure sur le bras de relevage.

Le volume intérieur des deux portions d'un même cylindre est séparé en trois chambres de volume variable, à savoir :
- une chambre côté tige du premier vérin de travail, comprise entre une plaque de fermeture traversée par la tige et le piston du vérin de travail,
- une chambre intermédiaire comprise entre le piston du vérin de travail et le piston flottant,
- et une chambre côté fond du deuxième vérin, comprise entre le piston flottant et le fond du vérin,
une bague de retenue délimitant la course du piston flottant,
chaque chambre comportant dans sa paroi un orifice de raccordement à une canalisation d'arrivée ou d'évacuation de fluide, l'orifice étant situé dans une zone correspondant au volume minimal de la chambre.
L'alimentation en fluide sous pression est dirigée vers la chambre côté fond et lorsque la pression dans cette chambre atteint une valeur déterminée, qui s'obtient lorsque le piston flottant arrive en butée sur la bague de retenue, l'alimentation de la chambre intermédiaire est commandée, l'autre chambre côté tige étant reliée à l'échappement.

Dans le dispositif de relevage défini ci-dessus, avantageusement :
- l'orifice de la chambre côté fond du deuxième vérin est relié à un premier orifice de distributeur par l'intermédiaire d'une valve de commande électrique autorisant une alimentation en direct et une vidange contrôlée;
- l'orifice de la chambre intermédiaire est relié au même premier orifice de distributeur avec interposition d'un clapet anti-retour empêchant l'écoulement vers la chambre depuis le premier orifice de distributeur, mais autorisant l'écoulement en sens contraire,
- une conduite de liaison munie d'une valve pilotée selon la pression de la chambre côté fond, cette conduite de liaison étant branchée d'une part sur la conduite de l'orifice de la chambre du fond entre la valve pilotée électriquement et l'orifice de distributeur, et d'autre part sur la conduite de l'orifice de la chambre intermédiaire entre le clapet anti-retour et l'orifice de distributeur, la valve pilotée s'ouvrant lorsque la pression est suffisante dans la chambre du fond, et assurant alors l'alimentation sous pression de la chambre intermédiaire.

La valve de la conduite de liaison peut être pilotée hydrauliquement, ou pilotée électriquement par un commutateur électrique sensible à la pression dans la conduite de l'orifice de la chambre du fond. De cette façon il y au automatiquement le remplissage prioritaire de la chambre du fond avant de passer en mode travail, afin d'éviter la remontée en mode escamoté en l'absence de commande volontaire.

Selon une autre possibilité, les vérins du dispositif de relevage comportent des cylindres distincts, rendus solidaires par leurs fonds, en particulier par soudage, leurs tiges étant opposées.

Selon le principe de l'invention, un vérin standard est remplacé par un ensemble de deux vérins formant un vérin double. D'un côté du vérin double est positionné le vérin de travail à grande course, servant au fonctionnement du relevage dans sa course de travail. De l'autre côté du vérin double est positionné le deuxième vérin, de course réduite, destiné à prolonger la course vers le haut, au-delà du mode travail pour atteindre le mode replié.

La tige du deuxième vérin peut être articulée à son extrémité supérieure sur le châssis tandis que la tige du vérin de travail est articulée à son extrémité inférieure sur le bras de relevage.

Un vérin de travail et un deuxième vérin peuvent être associés à chacun des bras de relevage.

Les chambres du deuxième vérin peuvent être reliées en parallèle à celles du vérin de travail, avec interposition d'une valve permettant d'isoler, en position fermée, les chambres du deuxième vérin de celles du vérin de travail.

En mode de travail normal, les deuxièmes vérins de faible course restent en position allongée. Les deuxièmes vérins peuvent être reliés en parallèle au(x) vérin(s) de travail à grande course avec un distributeur ou une valve étanche assurant, en position fermée, l'isolement entre deuxièmes vérins courts et vérins de travail longs.

Le dispositif comporte avantageusement, en plus des commandes situées au poste de conduite, dans la cabine du tracteur, des commandes extérieures situées hors de la cabine de conduite, avec notamment bouton à actionner, nécessitant que l'utilisateur descende de la cabine en particulier pour commander le passage en mode escamoté. Le dispositif peut comporter un interrupteur à actionner simultanément avec un bouton de commande de montée du vérin de travail pour la commande du passage en position escamotée. Lors de l'activation des commandes extérieures, l'interrupteur, à actionner simultanément avec le bouton de commande de montée des vérins de travail, permet d'ouvrir la valve ou le distributeur autorisant la liaison entre deuxièmes vérins et les vérins de travail pour prolonger la course vers le haut afin d'atteindre la position escamotée. De cette façon, avec une commande d'escamotage accessible de préférence seulement de l'extérieur il n'y a pas de risque d'interférence entre le mode travail et le mode escamotage.

Le fait que l'utilisateur doive se servir de ses deux mains, à l'extérieur, pour actionner deux boutons de façon simultanée permet de garantir une opération sure en évitant les fonctionnements par inadvertance. Le passage de la position travail à la position escamotée s'obtient sans aucune intervention mécanique.

Enfin cette solution autorise l'utilisation de bras indépendants permettant les mouvements d'oscillation latérale.

Afin de compléter la sécurité de fonctionnement, il est prévu, de façon optionnelle, d'ajouter un capteur, sensible à la position escamotée du relevage, pour n'autoriser le fonctionnement en cabine que lorsque le deuxième vérin est en position allongée.

Selon une solution de gestion alternative, il est possible d'incorporer un capteur de position angulaire destiné principalement à faire du contrôle automatique. En effectuant un calibrage de la plage de fonctionnement du capteur avec seulement référence à la course des vérins de travail (les deuxièmes vérins étant en position allongée ou étendue) toute commande est interdite depuis la cabine du tracteur lorsque le mouvement du capteur de position indique un déplacement hors de la plage de calibrage.

De cette façon il est possible de compléter la fonction sécurité en bénéficiant du capteur de position, évitant ainsi d'avoir recours à un capteur contrôlant l'extension des deuxièmes vérins (vérins courts) pour autoriser le fonctionnement des commandes en cabine

L'invention consiste, mises à part les dispositions exposées ci-dessus, en un certain nombre d'autres dispositions dont il sera plus explicitement question ci-après à propos d'un exemple de réalisation décrit en détail avec référence aux dessins annexés, mais qui n'est nullement limitatif. Sur ces dessins :
Fig. 1 est une vue de gauche d'un relevage avant selon l'invention, en position basse de travail.
Fig.2 est une vue de gauche du relevage en position haute de travail.
Fig.3 est une vue de gauche du relevage en position haute escamotée.
Fig. 4 est une vue partielle en perspective de trois quarts avant du relevage en position escamotée, le bras gauche étant retiré.
Fig. 5 est un schéma à plus grande échelle des vérins et de leurs liaisons hydrauliques.
Fig.6 est un schéma simplifié d'un mode de réalisation avantageux de l'invention, et
Fig.7 est un schéma simplifié d'une variante de la réalisation de Fig.6.

En se reportant aux dessins, on peut voir un dispositif de relevage avant pour tracteur agricole comprenant un châssis 1 propre à être fixé par boulonnage à l'ossature d'un tracteur, et deux bras inférieurs d'attelage 2 et 2', seul le bras gauche 2 étant visible. Chaque bras est monté pivotant autour d'un axe d'articulation 3, 3' prévu en partie basse du châssis 1.

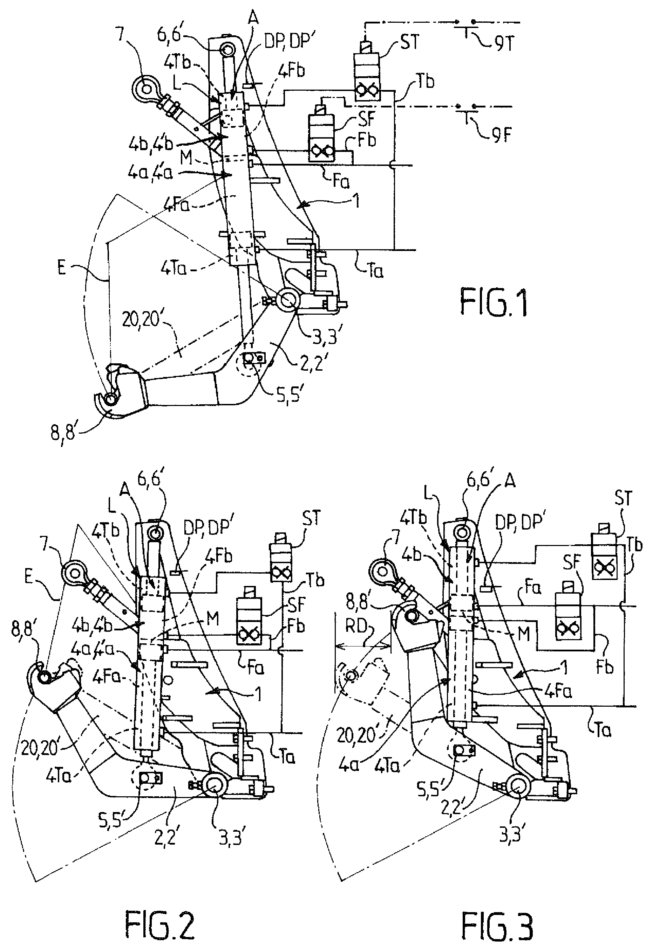

Un vérin de travail gauche 4a et un vérin de travail droit 4'a sont prévus pour assurer la course de levage ou course de travail du bras associé. La course de travail est celle pour laquelle un outil est attelé aux mains d'attelage 8,8' prévues aux extrémités des bras éloignées du châssis 1. Cette course de travail est comprise entre une position basse illustrée sur Fig.1 et une position haute illustrée sur Fig.2. Les tiges des vérins 4a et 4'a sont respectivement reliées aux bras 2 et 2' par des axes 5-5' d'articulation.

Les bras 2, 2' sont coudés, en forme d'angle obtus, avec leur convexité tournée vers le bas. La tige du vérin est attelée à la partie du bras comprise entre l'articulation 3, 3' sur le châssis et le coude du bras. Les axes d'articulation 5,5' des tiges sur les bras sont situés, dans l'exemple considéré, en avant (selon le sens normal de progression du tracteur) des axes 3,3' d'articulation des bras sur le châssis. En variante, les bras pourraient se prolonger vers l'arrière des axes 3, 3' et les tiges pourraient être reliées aux bras en arrière des axes 3,3' ; dans ce cas, le dispositif serait adapté en conséquence à l'inversion de sens, la montée des bras étant obtenue par sortie de la tige, et la descente par rentrée de la tige.

Le dispositif comporte un moyen de déplacement A, pouvant être commandé exclusivement au moyen d'une commande dédiée localisée de préférence à l'extérieur, propre à faire passer le ou les bras 2,2' dans une position escamotée illustrée sur Fig.3, plus en retrait que la position de travail relevée illustrée sur Fig.2. Le passage de la position travail à la position escamotée est obtenu sans effort manuel. Le passage inverse de la position escamotée à la position de travail , qui ne crée pas de risque d'interférence, peut être obtenu automatiquement de la cabine ou à partir de commandes extérieures pour actionner le relevage avant

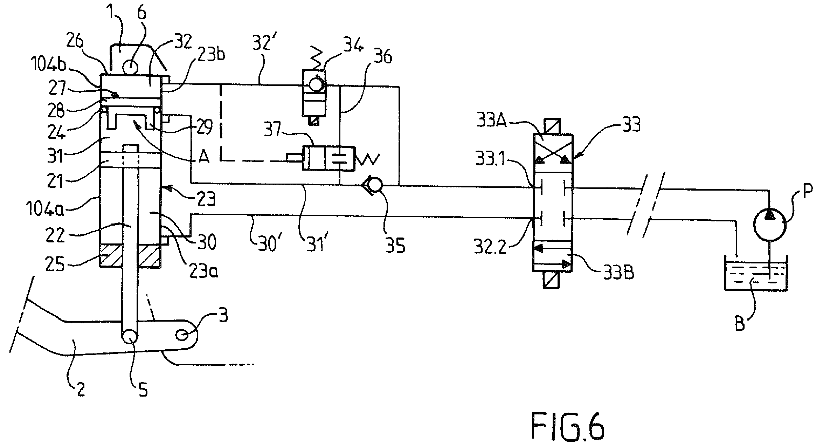

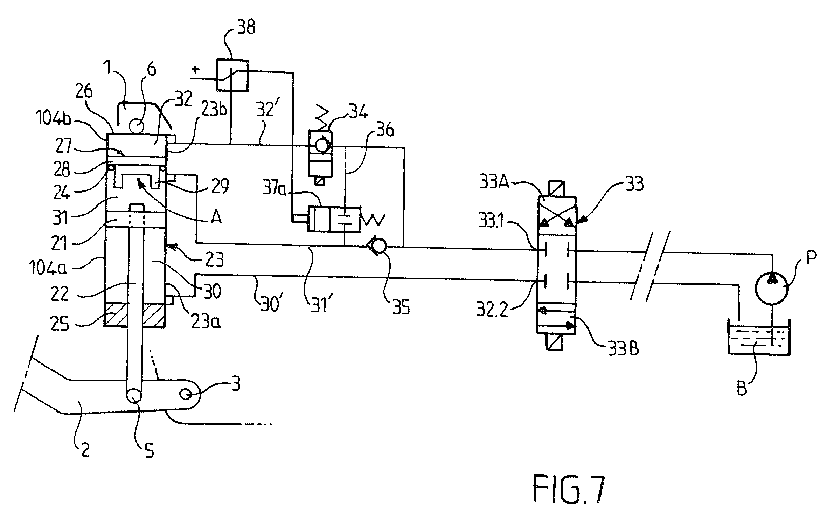

Le moyen de déplacement A comprend un moyen de liaison L de longueur réglable entre l'un des éléments, cylindre ou tige, du vérin de travail 4a, 4'a et l'une des pièces constituées par le châssis 1 ou le bras 2,2'. Selon l'exemple de réalisation de Fig.1-3, les axes 5, 5' d'articulation des tiges sur les bras sont situés en avant des axes 3,3' d'articulation des bras sur le châssis ; dans ces conditions, le moyen de liaison L est maintenu dans un état allongé pour le mode de travail normal (Fig.1 et 2), et est placé dans un état rétracté (Fig.3) pour que le ou les bras 2, 2' passent en une position escamotée. L'inverse serait commandé si les axes 5, 5' étaient situés en arrière des axes 3,3'. Dans ce cas le piston flottant (selon figure 6 et 7) devrait être situé du côté tige, mais le mode de fonctionnement resterait inchangé.
Le moyen de liaison de longueur réglable est constitué par un deuxième vérin 4b ,4'b maintenu en position allongée en mode de travail normal, et commandé en position rétractée pour le passage en position escamotée. Les tiges des vérins 4b et 4'b sont respectivement reliées au châssis 1 par des axes d'articulation 6-6'

Les vérins 4a-4b et 4'a-4'b sont coaxiaux, avec cylindres de même diamètre. Ils sont réunis pour former un assemblage de deux vérins soudés bout à bout par leur fond éloigné des tiges, et dont les chambres opposées à la tige de piston sont séparées par une cloison M.
Le vérin de travail 4a, 4'a correspond à la partie de l'assemblage ayant une course longue utilisée pendant le travail et le deuxième vérin 4b, 4'b correspond à la partie de l'assemblage ayant une course plus réduite utilisée pour la phase d'escamotage hors utilisation, lorsqu'aucun outil n'est accroché aux extrémités des bras 2, 2'.
Dans un souci de simplification seul le côté gauche sera décrit en détail, mais les caractéristiques décrites s'appliquent intégralement au côté droit
Chaque ensemble de deux vérins 4a-4b et 4'a-4'b est constitué de quatre chambres : deux chambres 4Ta et 4Tb côté tige de vérin, et deux chambres 4Fa et 4Fb côté fût, c'est à dire côté opposé à chaque tige.
Les chambres côté tige 4Ta et 4Tb sont reliées entre elles par des canalisations Ta-Tb, et les chambres côté fût 4Fa et 4Fb sont reliées entre elles par des canalisations Fa-Fb qui sont ensuite reliées à la source d'huile sous pression générée par le tracteur.

Sur les canalisations Fb et Tb sont insérés des valves d'isolement SF et ST à pilotage électrique qui n'autorisent la liaison entre 4Ta et 4Tb, ainsi qu'entre 4Fa et 4Fb, que lorsqu'elles sont pilotées, ce qui provoque leur ouverture. En l'absence de pilotage, les valves SF et ST sont fermées et isolent 4Tb de 4Ta, et 4Fb de 4Fa.

On a représenté schématiquement, en trait mixte sur Fig.1-3, des bras 20-20' selon une conception traditionnelle de bras pour laquelle la course totale se limite à la course générée par la partie 4a et 4'a des vérins de levage

Les Fig. 1 et 2 montrent qu'il y a parfait recoupement des courses de levage entre la position basse et la position haute standardisées de travail, avec un outil E (schématiquement représenté par un simple trait) accroché au relevage.

Fig.3 montre les bras 2-2' en position escamotée lorsque les vérins 4a et 4b d'une part, et 4'a et 4'b d'autre part, sont simultanément rétractés, alors qu'aucun outil n'est accroché au relevage. Fig. 3 illustre ainsi la réduction de déport longitudinal RD entre la position haute de travail et la position haute escamotée.

En mode travail seul le vérin de travail 4a, 4'a est mis en mouvement sous l'action de la source de pression, le deuxième vérin 4b, 4'b étant isolé de la source de fluide par les valves ST et SF, et demeurant dans l'état allongé, tige sortie au maximum.

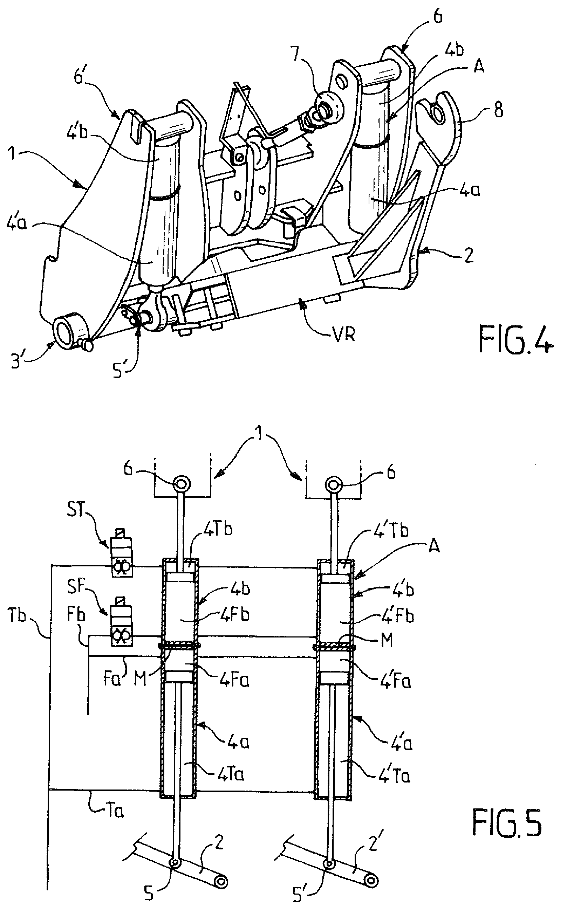

Les vérins 4a-4b et 4'a-4'b ont leurs chambres respectives 4Ta-4'Ta, 4Fa-4'Fa, 4Tb-4'Tb, 4Fb-4'Fb reliées entre elles en parallèle (Fig.5) . De la sorte une seule valve d'isolation côté tige ST et une seule valve d'isolation côté fût SF sont nécessaires.

Généralement, une plaque de verrouillage VR (Fig.4) démontable relie rigidement les bras droit 2' et gauche 2. Avec le mode de raccordement des canalisations d'alimentation en fluide sous pression selon l'invention, il est possible, après démontage de la plaque de verrouillage VR, d'autoriser l'oscillation latérale permettant un suivi de relief tout en portant l'outil relié au relevage au moyen des crochets d'attelage 8-8' et du troisième point supérieur 7 avec bielle de liaison.

Un interrupteur de commande, de préférence opérable seulement à l'extérieur du poste de conduite, comprenant les contacts dédiés 9F, 9T (Fig.1) de préférence à action jumelée est prévu pour commander l'ouverture des valves d'isolement SF et ST et autoriser le passage de fluide, pour passer en mode escamoté. Cet interrupteur doit être actionné simultanément à la commande, généralement par bouton, de la source de pression et débit.

Afin d'éviter un actionnement erroné du relevage lorsque celui-ci est en position escamotée, on peut adjoindre un détecteur DP, DP' de la position allongée maximum du deuxième vérin 4b, 4'b (ou partie courte de l'ensemble de deux vérins) qui interdit alors toute commande depuis le poste de conduite si cette position allongée maximum n'est pas atteinte.

L'allongement du deuxième vérin 4b, 4'b, comme son raccourcissement, est obtenu exclusivement en actionnant simultanément la commande des valves SF, ST avec les commandes extérieures (non représentées) de montée-descente des vérins de travail 4a, 4'a. Les commandes extérieures sont généralement formées par des boutons situés hors de la cabine de pilotage, et ne pouvant être actionnés que par un utilisateur se trouvant hors de cette cabine.

Une autre possibilité d'éviter un actionnement erroné du relevage avant, lorsque celui-ci est en positon escamotée, consiste à calibrer la plage de fonctionnement à partir d'un capteur angulaire (non représenté) par bras, tel que couramment utilisé, mesurant le mouvement angulaire des bras inférieurs 2, 2'. Lorsque la course des capteurs angulaires, couplés entre eux, indique une position au-delà de la plage de travail normale, tel que cela se produit lors du passage en mode escamoté, il se produit une annulation des fonctions commandées à partir de la cabine. Seules les commandes extérieures restent actives.

Avantageusement les composants des doubles vérins 4a-4b et 4'a-4'b sont de mêmes dimensions entre la partie a et la partie b, hors la course, simplifiant ainsi la fabrication et la gestion des pièces de rechange.

En se reportant à Fig.6 on peut voir un mode de réalisation particulièrement avantageux du deuxième vérin 104b d'un relevage selon l'invention, représenté sommairement. Le deuxième vérin 104b permet de régler la distance entre le châssis 1 et l'ensemble piston 21-tige 22 du premier vérin 104a, alors que dans la réalisation de Fig.1-3 le deuxième vérin 4b permet de régler la distance entre le châssis 1 et le cylindre du premier vérin 4a.

Le deuxième vérin 104b est coaxial au premier vérin 104b. Le cylindre 23b du deuxième vérin et celui 23a du premier vérin sont formés par des portions d'un même cylindre 23 et sont ouverts l'un vers l'autre. Une bague de retenue 24, notamment formée par une bague métallique ouverte, est ancrée dans la paroi interne du cylindre 23 et marque la séparation entre les deux portions 23a, 23b. Du côté éloigné du deuxième vérin 10b, une plaque démontable 25, traversée de manière étanche par la tige 21 ferme une extrémité du cylindre, l'autre extrémité étant fermée par un fond 26.

Le deuxième vérin 104b comporte un piston flottant 27 avec une tête 28 et un prolongement 29 de plus petit diamètre qui fait saillie dans le cylindre 23a du premier vérin 104a. Le piston flottant 27 constitue une butée pour l'ensemble piston tige du premier vérin en position rentrée. La bague de retenue 24 permettant d'arrêter le piston flottant 27 en position sortie.

Le cylindre 23b du deuxième vérin est articulé sur le châssis 1 soit directement à son extrémité supérieure, soit par une chape intermédiaire non représentée. La tige 22 du vérin de travail 104a est articulée à son extrémité inférieure sur le bras de relevage 2.

Le volume intérieur des deux cylindres est séparé en trois chambres de volume variable, à savoir :
- une chambre 30 côté tige du premier vérin de travail 104a , comprise entre la plaque de fermeture 25 et le piston 21 du vérin de travail,
- une chambre intermédiaire 31 comprise entre le piston 21 du vérin de travail et le piston flottant 27,
- et une chambre 32 côté fond du deuxième vérin 104b, comprise entre le piston flottant 27 et le fond 26 du vérin.

Chaque chambre 30, 31, 32 comporte dans sa paroi un orifice de raccordement à une canalisation d'arrivée ou d'évacuation de fluide, respectivement 30', 31', 32'. L'orifice de raccordement est situé dans une zone correspondant au volume minimal de la chambre, à savoir : au voisinage de la plaque 25 pour l'orifice de la canalisation 30' ; au voisinage de la bague 24 pour l'orifice de la canalisation 31' ; et au voisinage du fond 26 pour l'orifice de la canalisation 32'.

L'orifice de la chambre 32 côté fond du deuxième vérin est relié à un premier orifice 33.1 d'un distributeur 33 à trois positions, avec centre fermé, par l'intermédiaire d'une valve 34 pilotée électriquement à distance, en particulier à partir d'une commande dédiée située de préférence à proximité des commandes extérieures et à actionner simultanément. L'orifice de la chambre intermédiaire 31 est relié au même premier orifice 33.1 de distributeur avec interposition d'un clapet anti-retour 35 empêchant l'écoulement vers la chambre 31 depuis le premier orifice 33.1 de distributeur, mais autorisant l'écoulement en sens contraire.

Une conduite de liaison 36, munie d'une valve 37 pilotée selon la pression de la chambre 32 côté fond, est branchée d'une part sur la conduite 32' de l'orifice de la chambre du fond 32 entre la valve 34 pilotée électriquement et l'orifice 33.1 de distributeur, et d'autre part sur la conduite 31' de l'orifice de la chambre intermédiaire 31, entre le clapet anti-retour 35 et l'orifice de la chambre intermédiaire 31. La valve pilotée 37 s'ouvre lorsque la pression est suffisante dans la chambre du fond 32, et assure alors l'alimentation sous pression de la chambre intermédiaire 31. La montée en pression s'obtient lors de l'arrivée en butée du piston 27 sur la bague 24 et assure le contrôle automatique de la course de travail sans action spécifique évitant toute erreur d'utilisation. Selon la réalisation de Fig.6, la valve 37 de la conduite de liaison est pilotée hydrauliquement.

L'orifice de la chambre 30 côté tige du premier vérin 104a est relié par la canalisation 30' à un deuxième orifice 33.2 du distributeur 33.

Lorsque le distributeur 33 est dans sa position centre fermé, illustrée sur Fig.6, les chambres 30, 31, 32 sont isolées de la source de pression P ainsi que de la bâche B. Lorsque le distributeur est actionné dans la position 33A correspondant au croisement des orifices situés des deux côtés du distributeur, l'orifice 33.1 est relié à la bâche B, ou échappement, tandis que l'orifice 33.2 est relié à la pression. La situation est inversée pour l'autre position de travail 33B du distributeur.

Le fonctionnement est le suivant.

En position de travail normal du relevage, la chambre 32 est remplie d'huile, et le piston flottant 27 est en butée contre la bague 24. Le prolongement 29 occupe sa position la plus éloignée du fond 26 et détermine la fin de course haute du piston 21 et de la tige 22 du vérin 104a pour le travail avec un outil accroché. La valve 34 est maintenue fermée.

La montée de l'outil accroché au relevage est obtenue par passage du distributeur 33 en position 33A. L'huile sous pression est envoyée dans la chambre 30, tandis que la chambre 31 est mise à l'échappement. Le piston 21 peut remonter. La chambre 32 ne se vide pas à l'échappement car la valve 34 reste fermée. La fin de course haute de travail est limitée par le piston flottant 27 en position basse extrême.

La descente de l'outil accroché au relevage est obtenue par passage du distributeur 33 en position 33B. La chambre 30 est mise à l'échappement. Par le simple poids de l'outil, la tige 22 et le piston 21 peuvent descendre. Toutefois, la valve 34 est toujours ouverte dans le sens de circulation allant vers le vérin et l'huile sous pression sortant par l'orifice 33.1 est dirigée vers la chambre de fond 32 assurant un contrôle automatique de maintient en extension de la chambre du fond. Quand la chambre 32 est pleine, la pression monte, ce qui provoque l'ouverture de la valve 37 et permet l'alimentation en huile sous pression de la chambre intermédiaire 31. La descente du piston 21 s'effectue alors sous pression.

Pour le passage en position escamotée, lorsqu'aucun outil n'est accroché au relevage, l'utilisateur commande simultanément le passage du distributeur 33 en position 33A et l'ouverture de la valve 34. La chambre 30 étant reliée à la pression, le piston 21 s'éloigne de la plaque 25, et les chambres 31, 32 reliées à l'échappement se vident. En fin de course haute le piston flottant 27 est en butée contre le fond 26 tandis que le piston 21 est en butée contre le prolongement 29. Le bras 2 occupe une position escamotée, plus relevée que la position haute de travail. Le passage en position escamotée ne s'obtenant qu'en l'absence d'outil, le retour en position de travail ne s'obtient pas par gravité ce qui assure le remplissage de la chambre du fond 32 contrôlant ainsi automatiquement la course de travail en limitant la remontée en l'absence de commande volontaire de la fonction escamotage.

Fig.7 illustre une variante de la réalisation de Fig.6. La valve 37 pilotée hydrauliquement de Fig.6 est remplacée par une valve 37a pilotée électriquement par un interrupteur 38 sensible à la pression dans la chambre de fond 32. Lorsque cette pression dépasse une valeur déterminée, l'interrupteur 38 se ferme et assure l'alimentation électrique de la valve 37a qui s'ouvre.

Un interrupteur à commande manuelle (non représenté) peut être inséré dans la ligne électrique d'alimentation de la valve 37a de sorte de pouvoir sélectionner à distance le mode simple effet avec cet interrupteur en position ouverte.

L'invention permet un passage du mode travail au mode escamoté sans aucun effort manuel, ni perte de temps. De plus la séparation des fonctions travail et escamoté évite toute erreur pendant l'utilisation.

Enfin les avantages de résistance des bras et de capacité de suivi transversal du relief tout en portant l'outil sont préservés.

Le positionnement respectif des courses longues et courtes en haut ou en bas ne change pas le résultat.

## Revendications

1. Dispositif de relevage avant pour tracteur, en particulier agricole, permettant d'atteler et de manoeuvrer un outil, comprenant :
- un châssis (1) à fixer sur l'ossature du tracteur ;
- deux bras inférieurs (2, 2') articulés sur le châssis et comportant, à leur extrémité éloignée du châssis, un moyen d'attelage (8,8') de l'outil ;
- au moins un vérin de travail (4a, 4'a) dont l'un des éléments, cylindre ou tige, est relié au châssis et dont l'autre élément, tige ou cylindre, est relié à l'un des bras, ce vérin de travail permettant d'assurer les mouvements du ou des bras selon une course de travail entre une position basse et une position relevée correspondant au mode de travail normal,
- un moyen de déplacement (A), pouvant être commandé à partir d'une commande, propre à faire passer le ou les bras dans une position escamotée, plus en retrait que la position de travail relevée, le moyen de déplacement (A) comprenant un moyen de liaison (L) de longueur réglable entre l'un des éléments, cylindre ou tige, du vérin de travail (4a,4'a ; 104a) et l'une des pièces constituées par le châssis ou un bras,
**caractérisé en ce que** le moyen de liaison (L) est constitué par un deuxième vérin (4b, 4'b;104b) maintenu en une première position, allongée ou rétractée, en mode de travail normal, et commandé en une deuxième position, rétractée ou allongée, pour le passage en position escamotée, le passage de la position travail à la position escamotée s'obtenant sans aucun effort manuel,
et **en ce que** le deuxième vérin (4b, 4'b ; 104b) est coaxial au premier vérin (4a,4'a ;104a).

2. Dispositif selon la revendication 1, **caractérisé en ce que** le cylindre du deuxième vérin (4b, 4'b ; 104b) a même diamètre et prolonge celui du premier vérin (4a,4'a ;104a), les cylindres étant solidaires.

3. Dispositif selon la revendication 1 ou 2, **caractérisé en ce que** le cylindre (23b) du deuxième vérin (104b) et celui (23a) du premier cylindre (104a) sont formés par des portions d'un même cylindre (23) et sont ouverts l'un vers l'autre, une bague de retenue (24) étant ancrée dans la paroi interne du cylindre (23) et marquant la séparation entre les deux portions, et le deuxième vérin (104b) comporte un piston flottant (27) avec une tête (28) et un prolongement (29) de plus petit diamètre qui fait saillie dans le cylindre (23a) du premier vérin (104a) et constitue une butée pour l'ensemble piston-tige du premier vérin en position rentrée, la bague de retenue permettant d'arrêter le piston flottant en position sortie.

4. Dispositif selon la revendication 3, **caractérisé en ce que** le cylindre du deuxième vérin (104b) est articulé à son extrémité supérieure sur le châssis (1) tandis que la tige (22) du vérin de travail (104a) est articulée à son extrémité inférieure sur le bras de relevage (2).

5. Dispositif selon l'une des revendications 1 à 3, **caractérisé en ce que** le volume intérieur des deux cylindres est séparé en trois chambres (30,31,32) de volume variable, à savoir :
- une chambre (30) côté tige du premier vérin de travail (104a), comprise entre la plaque de fermeture (25) traversée par la tige et le piston (21) du vérin de travail,
- une chambre intermédiaire (31) comprise entre le piston (21) du vérin de travail et le piston flottant (27),
- et une chambre (32) côté fond du deuxième vérin, comprise entre le piston flottant (27) et le fond (26) du vérin,
une bague de retenue (24) délimitant la course du piston flottant (27),
chaque chambre comportant dans sa paroi un orifice de raccordement à une canalisation d'arrivée ou d'évacuation de fluide, l'orifice étant situé dans une zone correspondant au volume minimal de la chambre.

6. Dispositif selon la revendication 5, **caractérisé en ce que** l'alimentation en fluide sous pression est dirigée vers la chambre (32) côté fond et lorsque la pression dans cette chambre atteint une valeur déterminée, qui s'obtient lorsque le piston flottant arrive en butée sur la bague de retenue (24), l'alimentation de la chambre intermédiaire (31) est commandée, l'autre chambre (30) côté tige étant reliée à l'échappement.

7. Dispositif selon la revendication 6, **caractérisé en ce que** :
- l'orifice de la chambre (32) côté fond du deuxième vérin (104b) est relié à un premier orifice (33.1) de distributeur par l'intermédiaire d'une valve de commande électrique (34) ;
- l'orifice de la chambre intermédiaire (31) est relié au même premier orifice (33.1) de distributeur avec interposition d'un clapet anti-retour (35) empêchant l'écoulement vers la chambre (31) depuis le premier orifice (33.1) de distributeur, mais autorisant l'écoulement en sens contraire,
- une conduite de liaison (36) munie d'une valve (37, 37a) pilotée selon la pression de la chambre (32) côté fond, cette conduite de liaison étant branchée d'une part sur la conduite de l'orifice de la chambre du fond (32) entre la valve (34) pilotée électriquement et l'orifice (33.1) de distributeur, et d'autre part sur la conduite de l'orifice de la chambre intermédiaire (31) entre le clapet anti-retour (35) et l'orifice (33.1) de distributeur, la valve pilotée (37,37a) s'ouvrant lorsque la pression est suffisante dans la chambre (32) du fond, et assurant alors l'alimentation sous pression de la chambre intermédiaire (31).

8. Dispositif selon la revendication 7, **caractérisé en ce que** la valve (37) de la conduite de liaison est pilotée hydrauliquement.

9. Dispositif selon la revendication 7, **caractérisé en ce que** la valve (37a) de la conduite de liaison est pilotée électriquement par un commutateur électrique (38) sensible à la pression dans la conduite de l'orifice de la chambre du fond.

10. Dispositif selon la revendication 1 ou 2, **caractérisé en ce que** les vérins (4a, 4'a ; 4b, 4'b) comportent des cylindres distincts, rendus solidaires par leurs fonds, en particulier par soudage, leurs tiges étant opposées.

11. Dispositif selon la revendication 10, **caractérisé en ce que** la tige du deuxième vérin (4b, 4'b) est articulée à son extrémité supérieure sur le châssis (1) tandis que la tige du vérin de travail (4a, 4'a) est articulée à son extrémité inférieure sur le bras de relevage (2, 2').

12. Dispositif selon l'une quelconque des revendications 1 à 6, **caractérisé en ce qu'**il comprend un vérin de travail (4a, 4'a; 104a) et un deuxième vérin (4b, 4'b ; 104b) associés à chacun des bras de relevage.

13. Dispositif selon l'une quelconque des revendications précédentes, **caractérisé en ce que** les chambres (4Tb, 4Fb) du deuxième vérin (4b) sont reliées en parallèle à celles (4Ta, 4Fa) du vérin de travail (4a), avec interposition d'une valve (ST ; SF) permettant d'isoler, en position fermée, les chambres du deuxième vérin (4b) de celles du vérin de travail (4a).

14. Dispositif selon l'une quelconque des revendications précédentes, **caractérisé en ce qu'**il comporte un interrupteur (9F, 9T) à actionner simultanément avec un bouton de commande de montée du vérin de travail (4a,4'a), pour la commande du passage en position escamotée, pour éviter tout risque d'interférence entre le mode travail et le mode escamotage.

15. Dispositif selon l'une quelconque des revendications précédentes, **caractérisé en ce qu'**il comporte au moins un capteur (DP, DP') sensible à la position escamotée du relevage pour n'autoriser le fonctionnement en cabine que lorsque le deuxième vérin (4b, 4'b) est dans la position allongée.

16. Dispositif selon l'une quelconque des revendications précédentes, **caractérisé en ce qu'**il comporte un capteur de position angulaire pour un contrôle automatique, de sorte qu' en effectuant le calibrage de la plage de fonctionnement du capteur avec seulement référence à la course de travail des vérins de travail (4a,4'a), les deuxièmes vérins (4b, 4'b) étant en position allongée, toute commande depuis la cabine du tracteur est interdite lorsque le mouvement du capteur de position indique un déplacement hors de la plage de calibrage.

## Patentansprüche

1. Fronthubvorrichtung für einen insbesondere landwirtschaftlichen Traktor, welche das Ankoppeln und Bedienen eines Werkzeugs ermöglicht, mit:
- einem Gestell (1) zum Anbringen an dem Rahmen des Traktors;
- zwei unteren Armen (2, 2'), die an dem Rahmen angelenkt sind und an ihrem dem Gestell abgewandten Ende eine Kopplungseinrichtung (8, 8') für das Werkzeug aufweisen;
- mindestens einem Arbeitszylinder (4a, 4'a), wobei ein Element desselben, der Zylinder oder die Stange, mit dem Gestell verbunden ist, und das andere Element, die Stange oder der Zylinder, mit einem der Arme verbunden ist, wobei der Arbeitszylinder die Bewegungen des Arms oder der Arme entlang eines Arbeitsweges zwischen einer unteres Position und einer dem normalen Arbeitsmodus entsprechenden angehobenen Position ermöglicht;
- einer von einer Steuerung aus steuerbaren Bewegungseinrichtung (A), welch geeignet ist, den Arm oder die Arme in eine zusammengeklappte Position zu überführen, die weiter zurückgezogen ist als die angehobene Arbeitsposition, wobei die Bewegungseinrichtung (A) eine Verbindungseinrichtung (L) mit einstellbarer Länge zwischen einem der Elemente, dem Zylinder oder der Stange, des Arbeitszylinders (4a, 4'a; 104a) und einem der durch das Gestell oder einen Arm gebildeten Teile aufweist,
**dadurch gekennzeichnet, dass** die Verbindungseinrichtung (L) durch einen zweiten Zylinder (4b, 4'b; 104b) gebildet ist, der im normalen Arbeitsmodus in einer ersten, ausgefahrenen oder eingezogenen Position gehalten ist, und für den Übergang in die zusammengeklappte Position in eine zweite, eingezogene oder ausgefahrene Position gesteuert wird, wobei der Übergang von der Arbeitsposition in die zusammengeklappte Position ohne jeglichen manuellen Kraftaufwand erreicht wird,
und dass der zweite Zylinder (4b, 4'b; 104b) mit dem ersten Zylinder (4a, 4'a; 104a) koaxial ist.

2. Vorrichtung nach Anspruch 1, **dadurch gekennzeichnet, dass** der Zylinder des zweiten Zylinders (4b, 4'b; 104b) den selben Durchmesser aufweist und denjenigen des ersten Zylinders (4a, 4'a; 104a) verlängert, wobei die Zylinder fest miteinander verbunden sind.

3. Vorrichtung nach Anspruch 1 oder 2, **dadurch gekennzeichnet, dass** der Zylinder (23b) des zweiten Zylinders (104b) und derjenige (23a) des ersten Arbeitszylinders (104a) durch Bereiche desselben Zylinders (23) gebildet sind und zueinander offen sind, wobei ein Rückhaltering (24) in der Innenwand des Zylinders (23) befestigt ist und die Trennung zwischen den beiden Bereichen markiert, und wobei der zweite Zylinder (104b) einen schwimmend gelagerten Kolben (27) mit einem Kopf (28) und einer Verlängerung (29) mit kleinerem Durchmesser aufweist, welche in den Zylinder (23a) des ersten Zylinders (104a) erstreckt und einen Anschlag für die Kolben/Stange-Anordnung des ersten Zylinders in der eingezogenen Position bildet, wobei der Rückhaltering das Anhalten des schwimmend gelagerten Kolbens in der ausgefahrenen Position ermöglicht.

4. Vorrichtung nach Anspruch 3, **dadurch gekennzeichnet, dass** der Zylinder des zweiten Zylinders (104b) an seinem oberen Ende an dem Gestell (1) angelenkt ist, während die Stange (22) des Arbeitszylinders (104a) an seinem unteren Ende an dem Hubarm (2) angelenkt ist.

5. Vorrichtung nach einem der Ansprüche 1 bis 3, **dadurch gekennzeichnet, dass** das Innenvolumen der beiden Zylinder in drei Kammern (30, 31, 32) mit variablem Volumen unterteilt ist, nämlich:
- eine Kammer (30) auf Seiten des ersten Arbeitszylinders (104a) zwischen der von der Stange durchquerten Schließplatte (25) und dem Kolben (21) des Arbeitszylinders,
- eine Mittelkammer (31) zwischen dem Kolben (21) des Arbeitszylinders und dem schwimmend gelagerten Kolben (27),
- und eine Kammer (32) auf Seiten des Bodens des zweiten Arbeitszylinders zwischen dem schwimmend gelagerten Kolben (27) und dem Boden (26) des Zylinders,
wobei ein Rückhaltering (24) den Hub des schwimmend gelagerten Kolbens (27) begrenzt,
wobei jede Kammer in ihrer Wand eine Öffnung zur Verbindung mit einer Fluideinlass- oder -auslasskanalsystem aufweist, wobei die Öffnung in einer Zone angeordnet ist, die dem Mindestvolumen der Kammer entspricht.

6. Vorrichtung nach Anspruch 5, **dadurch gekennzeichnet, dass** die Druckfluidversorgung in Richtung der auf Seiten des Bodens befindlichen Kammer (32) gerichtet ist, und dass, sobald der Druck in dieser Kammer einen bestimmten Wert erreicht, der sich ergibt, sobald der schwimmend gelagerte Kolben in Anlage an dem Rückhaltering (24) gelangt, die Versorgung der Mittelkammer (31) veranlasst wird, wobei die andere, auf Seiten der Stange befindliche Kammer (30) mit dem Auslass verbunden ist.

7. Vorrichtung nach Anspruch 6, **dadurch gekennzeichnet, dass**:
- die Öffnung der auf Seiten des Bodens des zweiten Zylinders (104b) befindlichen Kammer (32) mit einer ersten Verteileröffnung (33.1) über ein elektrisches Steuerventil (34) verbunden ist;
- die Öffnung der Mittelkammer (31) mit derselben ersten Verteileröffnung (33.1) unter Zwischenfügung eines Rückschlagklappe (35) verbunden ist, das ein Strömen von der ersten Verteileröffnung (33.1) zu der Kammer (31) verhindert, ein Strömen in der Gegenrichtung jedoch ermöglicht;
- eine Verbindungsleitung (36) vorgesehen ist, die mit einem Ventil (37, 37a) versehen ist, das entsprechend dem Druck der auf Seiten des Bodens befindlichen Kammer (32) gesteuert ist, wobei die Verbindungsleitung einerseits von der Leitung der Öffnung der auf Seiten des Bodens befindlichen Kammer (32) zwischen dem elektrisch gesteuerten Ventil (34) und der Verteileröffnung (33.1) und andererseits von der Leitung der Öffnung der Mittelkammer (31) zwischen der Rückschlagklappe (35) und der Verteileröffnung (33.1) abzweigt, wobei sich das gesteuerte Ventil (37, 37.a) öffnet, wenn der Druck in der auf Seiten des Bodens befindlichen Kammer (32) ausreicht, und somit die Druckbeaufschlagung der Mittelkammer (31) gewährleistet.

8. Vorrichtung nach Anspruch 7, **dadurch gekennzeichnet, dass** das Ventil (37) der Versorgungsleitung hydraulisch gesteuert ist.

9. Vorrichtung nach Anspruch 7, **dadurch gekennzeichnet, dass** das Ventil (37a) der Versorgungsleitung durch einen elektrischen Schalter (38) elektrisch gesteuert ist, welcher für den Druck in der Leitung der Öffnung der auf Seiten des Bodens befindlichen Kammer empfindlich ist.

10. Vorrichtung nach Anspruch 1 oder 2, **dadurch gekennzeichnet, dass** die Zylinder (4a, 4'a; 4b, 4'b) getrennte Zylinder aufweisen, die an ihren Böden insbesondere durch Schweißen fest miteinander verbunden sind, wobei ihre Stangen einander gegenüberliegen.

11. Vorrichtung nach Anspruch 10, **dadurch gekennzeichnet, dass** die Stange des zweiten Zylinders (4b, 4'b) an seinem oberen Ende an dem Gestell (1) angelenkt ist, während die Stange des Arbeitszylinders (4a, 4'a) an seinem unteren Ende an dem Hubarm (2, 2') angelenkt ist.

12. Vorrichtung nach einem der Ansprüche 1 bis 6, **dadurch gekennzeichnet, dass** sie einen Arbeitszylinder (4a, 4'a; 104a) und einen zweiten Zylinder (4b, 4'b; 104b) aufweist, die jedem der Hubarme zugeordnet sind.

13. Vorrichtung nach einem der vorhergehenden Ansprüche, **dadurch gekennzeichnet, dass** die Kammern (4Tb, 4Fb) des zweiten Zylinders (4b) parallel mit denen (4Ta, 4Fa) des Arbeitszylinders (4a) unter Zwischenfügung eines Ventils (ST; SF) verbunden sind, welches es ermöglicht, in der Schließstellung die Kammern des zweiten Zylinders (4b) von denen des Arbeitszylinders (4a) zu isolieren.

14. Vorrichtung nach einem der vorhergehenden Ansprüche, **dadurch gekennzeichnet, dass** sie einen Schalter (9F, 9T) aufweist, der um Steuern des Übergangs in die eingeklappte Position gleichzeitig mit einem Steuerknopf für das Anheben des Arbeitszylinders (4a, 4'a) zu betätigen ist, um jede Gefahr einer gegenseitigen Störung des Arbeitsmodus und des Zusammenklappmodus zu vermeiden.

15. Vorrichtung nach einem der vorhergehenden Ansprüche, **dadurch gekennzeichnet, dass** sie mindestens einen Sensor (DP, DP') aufweist, der für die zusammengeklappte Position der Hubeinrichtung empfindlich ist, um den Kabinenbetrieb erst freizugeben, wenn der zweite Zylinder (4b, 4'b) sich in der ausgefahrenen Position befindet.

16. Vorrichtung nach einem der vorhergehenden Ansprüche, **dadurch gekennzeichnet, dass** einen Winkelpositionssensor für eine automatische Kontrolle aufweist, derart, dass bei der Durchführung der Kalibrierung des Betriebsbereichs des Sensors allein unter Bezugnahme auf den Arbeitshub der Arbeitszylindern (4a, 4'a), bei sich in der ausgefahrenen Position befindlichen zweiten Zylindern (4b, 4'b), jede Steuerung von der Kabine des Traktors aus untersagt ist, wenn die Bewegung des Positionssensors eine Bewegung aus dem Kalibrierungsbereich heraus anzeigt.

## Claims

1. A front lifting device for a tractor, particularly an agricultural tractor, making it possible to hitch and maneuver an implement, comprising:
- a frame (1) to be fixed to the structure of the tractor;
- two lower arms (2, 2') articulated on the frame and comprising, at their end furthest from the frame, a coupling means (8, 8') for hitching the implement;
- at least one working jack (4a, 4'a) of which one of the elements, cylinder or rod, is connected to the frame and of which the other element, rod or cylinder, is connected to one of the arms, this working jack making it possible to move the arm or arms along a working stroke between a low position and a raised position corresponding to the normal working mode,
- a movement means (A) that can be controlled from a control, that is capable of moving the arm or arms into a foldaway position, more retracted than the raised working position, the movement means (A) comprising a linking means (L) of adjustable length between one of the elements, cylinder or rod, of the working jack (4a, 4'a; 104a) and one of the parts formed by the frame or an arm,
**characterized in that** the linking means (L) of adjustable length consists of a second jack (4b, 4'b; 104b) maintained in a first position, extended or retracted, in normal working mode, and controlled in a second position, retracted or extended, for the movement into the foldaway position, the movement from the working position to the foldaway position being obtained with no manual force,
and **in that** the second jack (4b, 4'b; 104b) is coaxial with the first jack (4a, 4'a; 104a).

2. The device as claimed in claim 1, **characterized in that** the cylinder of the second jack (4b, 4'b; 104b) has the same diameter and extends that of the first jack (4a, 4'a; 104a), the cylinders being attached.

3. The device as claimed in claim 1 or 2, **characterized in that** the cylinder (23b) of the second jack (104b) and the cylinder (23a) of the first cylinder (104a) are formed by portions of one and the same cylinder (23) and are open to one another, a retaining ring (24) being anchored in the inner wall of the cylinder (23) and marking the separation between the two portions, and the second jack (104b) comprises a floating piston (27) with a head (28) and an extension (29) of smaller diameter that protrudes into the cylinder (23a) of the first jack (104a) and consists of an abutment for the piston-rod assembly of the first jack in the "in" position, the retaining ring making it possible to stop the floating piston in the "out" position.

4. The device as claimed in claim 3, **characterized in that** the cylinder of the second jack (104b) is articulated at its top end on the frame (1) while the rod (22) of the working jack (104a) is articulated at its bottom end on the lift arm (2).

5. The device as claimed in claim 1 or 3, **characterized in that** the internal volume of the two cylinders is separated into three chambers (30, 31, 32) of variable volume, namely:
- a rod-side chamber (30) of the first working jack (104a), between the closure plate (25) traversed by the rod and the piston (21) of the working jack,
- an intermediate chamber (31) between the piston (21) of the working jack and the floating piston (27),
- and a bottom-side chamber (32) of the second jack, between the floating piston (27) and the bottom (26) of the jack,
a retaining ring (24) delimiting the travel of the floating piston (27),
each chamber comprising in its wall a port for connection to a pipe for the inflow or outflow of fluid, the port being situated in a zone corresponding to the minimal volume of the chamber.

6. The device as claimed in claim 5, **characterized in that** the supply of pressurized fluid is directed toward the bottom-side chamber (32) and when the pressure in this chamber reaches a determined value, which occurs when the floating piston reaches abutment on the retaining ring (24), the supply of the intermediate chamber (31) is controlled, the other, rod-side chamber (30) being connected to the exhaust.

7. The device as claimed in claim 6, **characterized in that**:
- the port of the bottom-side chamber (32) of the second jack (104b) is connected to a first port (33.1) of a directional flow valve via an electrically-controlled valve (34);
- the port of the intermediate chamber (31) is connected to the same first port (33.1) of the directional flow valve with interposition of a nonreturn valve (35) preventing flow to the chamber (31) from the first port (33.1) of the directional flow valve, but allowing flow in the opposite direction,
- a connecting duct (36) furnished with a valve (37, 37a) controlled according to the pressure in the bottom-side chamber (32), this connecting duct being connected on the one hand to the duct of the port of the bottom chamber (32) between the electrically-controlled valve (34) and the port (33.1) of the directional flow valve, and, on the other hand, to the duct of the port of the intermediate chamber (31) between the nonreturn valve (35) and the port (33.1) of the directional flow valve, the controlled valve (37, 37a) opening when the pressure is sufficient in the bottom chamber (32) and then ensuring the pressurized supply of the intermediate chamber (31).

8. The device as claimed in claim 7, **characterized in that** the valve (37) of the connecting duct is controlled hydraulically.

9. The device as claimed in claim 7, **characterized in that** the valve (37a) of the connecting duct is controlled electrically by an electric switch (38) sensitive to the pressure in the duct of the bottom chamber port.

10. The device as claimed in claim 1 or 2, **characterized in that** the jacks (4a, 4'a; 4b, 4'b) comprise separate cylinders, attached by their bottoms, particularly by welding, their rods being opposite one another.

11. The device as claimed in claim 10, **characterized in that** the rod of the second jack (4b, 4'b) is articulated at its top end on the frame (1) while the rod of the working jack (4a, 4'a) is articulated at its bottom end on the lift arm (2, 2').

12. The device as claimed in any one of claims 1 to 6, **characterized in that** it comprises a working jack (4a, 4'a; 104a) and a second jack (4b, 4'b; 104b) associated with each of the lift arms.

13. The device as claimed in any one of the preceding claims, **characterized in that** the chambers (4Tb, 4Fb) of the second jack (4b) are connected in parallel to the chambers (4Ta, 4Fa) of the working jack (4a), with interposition of a valve (ST; SF) making it possible to isolate, in the closed position, the chambers of the second jack (4b) from those of the working jack (4a).

14. The device as claimed in any one of the preceding claims, **characterized in that** it comprises a switch (9F, 9T) to be actuated simultaneously with a button for controlling the raising of the working jack (4a, 4'a), for controlling the movement into the foldaway position, in order to prevent any risk of interference between the working mode and the foldaway mode.

15. The device as claimed in any one of the preceding claims, **characterized in that** it comprises at least one sensor (DP, DP') which can detect the foldaway position of the lift in order to allow operation in the cabin only when the second jack (4b, 4'b) is in the extended position.

16. The device as claimed in any one of the preceding claims, **characterized in that** it comprises an angular position sensor for an automatic control, so that, by calibrating the operating range of the sensor with reference only to the working stroke of the working jacks (4a, 4'a), the second jacks (4b, 4'b) being in the extended position, any control from the cabin of the tractor is forbidden when the movement of the position sensor indicates a movement beyond the range of calibration.
